# EUROPEAN PATENT APPLICATION

(11) **EP 1 559 752 A2**
(43) Date of publication of application: **03.08.2005**
(21) Application number: 04107029.3
(22) Date of filing: 28.12.2004
(51) Int. Cl.: C09D 5/14, C09D 5/03

(54) **Antimicrobial-containing coating powder**

(30) Priority: 20.01.2004 US 760819
(71) Applicant: Spraylat Corporation, Pelham, New York 10803 (US)
(72) Inventor: Kim, Young Jun, 76210, Denton (US); Bush, Travis Owen, 76272, Valley View (US)
(74) Representative: Weber, Dieter, Dr.

(57) **Abstract**

The present invention is directed to antimicrobial -containing coating powders comprising antimicrobial additives stably attached to resinous coating powders. Such coating powders are produced by blending the respective powders at temperatures at least as high as the glass transition temperature of the resinous coating powder. Coatings produced by the coating powders of the invention exhibit the property of antimicrobial activity.

## Description

The present invention is generally directed toward antimicrobial - containing coating powders, a method for making such coating powders, and the use of such coating powders to form coated substrates having the property of antimicrobial activity.

### BACKGROUND OF THE INVENTION

There is a concern regarding health hazards arising from microorganisms such as bacteria, fungi, mold, yeast, and mildew. There is also concern that microorganisms contribute to the deterioration of plastic articles, including resinous coatings. To address such concerns, efforts have been made to produce resinous articles and coatings having at least some degree of antimicrobial activity.

In the field of resinous coating powders that are subsequently formed into coatings having antimicrobial activity, two United States patents address the above-mentioned concerns. They are United States Patent No. 5,980,620 to Brodie et al. and United States Patent No. 6,093,407 to Cummings et al. T hese patents are an improvement over prior art procedures, which simply mixed a coating powder with an antimicrobial additive and then formed a coating. Improved uniformity of antimicrobial additive distribution occurs thereby.

Both of the above -mentioned patents disclose making coating powders by pre-mixing thermoplastic or thermosetting resins containing conventional coating powder additives with an antimicrobial additive. The pre -mix is then melt extruded into chips; ground into a coating powder with a desired particle size; applied to a substrate by electrostatic spraying, tribocharged spraying a fluidized bed, or the like; and then melted or cured to form a coating on the substrate. Both patents report that the coatings obtained thereby exhibit antim icrobial activity.

As will be seen in greater detail later, the present invention produces a coating powder that, while distinct from the coating powders of the two above - mentioned patents and made by a distinct method, can also be formed into a coating having long lasting antimicrobial activity and essentially uniform distribution of the antimicrobial additive.

The uniform distribution of the antimicrobial additive is advantageous when compared to the simple mixtures of the prior art. The ability to manu facture the coating powder of the present invention in small batches also offers significant commercial advantages when compared to the manufacturing procedures of the above-mentioned two patents. Regarding the small batch advantage, one or two coating powders may be produced and then stored to await final formulation and stable attachment with the antimicrobial additive. Obtaining a final coating powder by subsequent, independent formulation of the coating powder with the antimicrobial additive permits pr e-production of relatively large quantities of the coating powder. The subsequent combination of a portion of the pre -produced coating powder to obtain a desired order size of an antimicrobial -containing coating powder obviates the need to utilize a singl e production run for a given order of antimicrobial-containing coating powder. Obviously, shorter production and delivery times are possible with the flexibility afforded by the present invention. Moreover, if a coating powder manufacturer is in the mids t of a production run of a given coating powder, the sole alternative to being able to quickly produce an antimicrobial -containing coating powder would be to interrupt the run, clean the manufacturing equipment, and then produce the new product. The equipment would then require cleaning again to resume the originally interrupted run. This substantial problem is solved through the present invention, thus enabling a wide variety of antimicrobial -containing coating powders to be quickly and efficiently produ ced and shipped to customers without interruption of any production runs. Thus, it may be seen that the present invention offers a combination of advantages not found in the prior art.

### SUMMARY OF THE INVENTION

The present invention is directed to a me thod of making a coating powder capable of subsequently being formed into coatings exhibiting antimicrobial activity. The method comprises providing a resinous coating powder (a powder capable of forming a coating), which comprises a resinous base composi tion containing at least one coating additive, then adding a solid antimicrobial additive powder to the resinous coating powder, and then blending the respective powders at a temperature of at least the glass transition temperature of the resinous base composition to cause the respective powders to become stably adhered to each other. Subsequently formed coatings exhibit the property of antimicrobial activity.

The present invention also includes the coating powder product of the above-described method. Such product comprises an effective amount of an antimicrobial additive stably adhered to a resinous coating powder.

The present invention further includes a coating method for forming coatings having the property of antimicrobial activity from the coati ng powders mentioned above.

### DETAILED DESCRIPTION OF THE INVENTION

Coating powders containing solid antimicrobial additives are used to coat and protect various products that may be exposed to microorganisms such as bacteria, fungi, yeast, mold, and mildew. Such coatings appear to suppress the growth of a broad range of microorganisms. For example, in some embodiments, antimicrobial activity with respect to Staphylococcus aureus, Escherichia coli, Bacillus subtillus, Streptococcus feacadis, Salmonella typ hinurium, Pseudomonas aeruginosa, and other Gram positive and Gram negative bacteria may be achieved. Coatings of the invention may also suppress the growth of certain higher organisms such as algae, fungi, filamentous fungi (Aspergillus, Aureobasidium, Botrytis, Ceratostomella, Cuvularia, Fusarium, and Penicillium species), yeast, mold, and mildew. Potential applications for the coatings of the invention may include many industrial, agricultural, commercial, or consumer products.

The invention involves p roviding a resinous coating powder constituent that is capable of being applied to a substrate and then formed into a coating by curing or melting. These resinous coating powder constituents comprise a resinous base composition containing one or more typical additives such as flow control additives, leveling agents, antioxidants, mar agents, slip agents, matting agents, dispersing agents, texturing agents, pigments, cross -linkers, catalysts, fillers, degassing agents, photo initiators, etc. A solid antimi crobial additive powder is stably adhered to the above -mentioned resinous coating powder to form a final coating powder.

The present invention can be utilized with conventional thermosetting coating powder chemistries such as epoxy, hybrid, polyester -TGIC, polyurethane, polyester-primid, polyester-TMMGU, acrylic, fluorocarbon, etc.; thermoplastic; and radiation curable coating powders such as those curable by ultraviolet (UV) and infrared (IR) radiation.

Thermoplastic coating powders suitable for use in the invention are well known in the art and include vinyls, polyolefins, nylons, polyesters, etc.

Radiation curable coating powders are also well known in the art. One important class of radiation curable coating powders is UV curable powder. UV curable powders have the ability to flow and cure and produce smooth coatings at much lower temperatures than possible with thermosetting powders. The low temperature cure results because the curing reaction is triggered by photo -initiated radiation rather than by heat.

Typically, UV coating powders are formulated from solid unsaturated base resins with low Tg, such as unsaturated polyesters; unsaturated co -polymerizable crosslinker resins, such as vinyl ethers; photoinitiators; flow and leveling agents; performance-enhancing additives; and if necessary, pigments and fillers. It is also common in the powder coating industry to replace all or part of the base resins or crosslinkers with crystalline materials to provide coating powders with lower melt viscosity and better flow out behavior.

As in the case of thermoplastic and thermosetting coating powders, UV curable coating powders may be applied to a substrate with electrostatic spray guns, tribochargeable guns, fluidizing beds, or the like.

The present invention can be utilized to obtain all ranges of color, including clear coatings, as well as special appearance coatings such as textured, structured, and Kracked Ice finishes.

Solid antimicrobial additive powders useful in the present invention include, but are not limited to, the following materials and admixtures thereof:

| **ANTIMICROBIAL ADDITIVE** | **TRADENLARK/ TRADE NAME** | **SOURCE** |
|---|---|---|
| | | |
| Zirconium phosphate -based Ceramic ion exchange resin containing silver | Alphasan | Milliken Chemical Spartansburg, SC |
| Crystallized powder containing silver ions | AgIon | AgIon Technologies, LLC Wakefield, MA |
| Soluble glass containing antimicrobial metal (Ag) ions | Ionpure | Ishizuka Glass Co., Ltd. Nagoya, Japan |
| Silver coated glass | Star Light | The Shephard Color Company, Cincinnati, OH |
| Silver coated mica | Conduct-o-fill | Potters Industries, Inc. Valley Forge, PA |
| Silver-coated glass fibergrain | Conduct-o-fill | Potters Industries, Inc. Valley Forge, PA |
| Silver-coated aluminum, nickel or copper | Conduct-o-fill | Potters Industries, Inc. Valley Forge, PA |

As may be seen from the above table, the antimicrobial agents of the invention contain silver, either as silver metal or silver ions. To achieve the objectives of the invention, a variety of materials containing silver or sil ver ions are contemplated. Admixtures of such materials are also contemplated.

An effective amount of antimicrobial agent to result in the property of antimicrobial activity in the coating produced from the coating powder is incorporated into the coating powder. A minimum silver content of about 0.5 ng/cm² is typically utilized to obtain such property.

The manufacturing process of the present invention results in a homogeneous distribution of the antimicrobial additive throughout the coating powder. A re latively low level of antimicrobial additive may be incorporated to achieve excellent efficacy toward a broad range of microorganisms, and such efficacy is maintained even when coated surfaces are abraded or cleaned using various household products. The c oating powder may be reclaimed.

Moreover, the longevity and durability of the coatings produced by the invention is superior to that of other organic antimicrobial additive -containing coatings. In this regard, coatings exhibiting good thermal stability and outdoor durability are obtained.

The coating powder manufacturing process generally comprises adding an effective amount of a solid antimicrobial additive powder to a resinous coating powder containing a resinous coating composition and at least one co ating additive and then blending the powders at a temperature at least that of the glass transition temperature of the resinous base composition to create stable adherence between the powders.

Following the addition step, the respective powders are blended at a temperature between the glass transition temperature at or above the resinous base composition of the coating powder component of the mixed powders. The glass transition temperature should be reached or exceeded to soften the resinous powder to an extent that stable adhesion occurs with the antimicrobial additive powder. Blending temperatures from about 30°C to about 100°C are contemplated and may vary due to differences in glass transition temperature for various resin chemistries. Blending at suc h elevated temperatures results in stable adherence between the resinous coating powder and antimicrobial additive powder. Such adhered product is then used as a coating powder to form a coating having antimicrobial activity on a desired substrate.

A wide range of powder particle sizes may be used in the present invention. Typical average powder particle sizes may range from about 25 microns to about 300 microns for the resinous coating powder and average particle sizes of the antimicrobial additive powders may range from about 0.5 microns to about 100 microns. Preferably, the resinous powder particle size ranges from about 40 microns to about 60 microns and from about 0.5 microns to about 2.0 microns for the antimicrobial additive powder.

The amount of antimicrobial additive to be added to the resinous coating powder should be an amount to be effective to impart antimicrobial activity to the coating subsequently formed. Typical effective amounts of antimicrobial additives, expressed as a weight percen tage of the total coating powder weight, range from about 0.1 wt. % to about 10.0 wt. %.

The method of the invention may be performed in any suitable blending apparatus such as described in United States Patent No. 5,187,220 to Richert, et al. in connection with a metallic bonding process involving mixing coating powders with metallic flakes. The apparatus should be capable of providing the necessary shear to cause the softened resinous coating powder and antimicrobial additive powder to become stably adhered to each other and at the same time maintain the powders in sufficient relative motion to prevent agglomeration of the resinous coating powder particles. Suitable apparatus includes medium and high intensity mixers having rotating blades, such as tho se available from Henschel, Littleford, Lödige (Maschinenbau GmbH), and Pappen Mier. In such rotating blade mixers, a blade tip speed of at least about 3 meters per second generally provides the requisite shear force to obtain the desired stable adherence and avoid undesirable agglomeration. With typical commercially available equipment, an upper limit of tip speed appears to be in the range of about 50 to about 100 meters per second. The necessary thermal energy for obtaining stable adherence between the respective powders may be provided entirely by the mechanical shear of blending; however it is contemplated that the mixer may be jacketed to provide external heating and/or cooling. Such jacketing provides for easier control of the process because reliance only upon shear to provide thermal energy may present control problems. As will be appreciated by those skilled in the art, specific temperatures, blending times, shear forces, tip speeds, etc. depend upon a number of factors, including powder comp ositions and particle sizes. Once the powders become stably adhered, the adhered powders are discharged from the blender to sieve through the appropriate size screen. Sieving will eliminate foreign materials and separate the powder from agglomeration, if any.

Coatings are then formed from the stably adhered powders by conventional methods already described above. In any event, following application to a desired substrate, the applied powders may be melted or cured, as appropriate, to form a coated substrate having antimicrobial activity.

The invention may be further understood and described by reference to the following examples:

### EXAMPLE 1

Antimicrobial polyester clear coating powders were prepared for the efficacy against bacteria and silver elusion. The composition of the treated and untreated articles are listed below:

| **Ingredient** | **A** | **B** | **C** | **G** | **J** |
|---|---|---|---|---|---|
| | | | | | |
| Base powder (polyester clear) | 99 | 98 | 97 | 99 | 100 |
| Alphasan RC5000 | 1 | 2 | 3 | - - - | - - - |
| AgIonAJ | --- | --- | --- | 1 | --- |

Alphasan RC5000: antimicrobial addi tive from Milliken Chemical.
AgIon AJ: antimicrobial additive from AgIon Technologies.
Experimental Information:
   1) Silver Elusion procedure: The bioavailable silver was run using Milliken method AM -12 (modified plate method). An index result above 0.5 is normally required to achieve antimicrobial performance with results of >=1.0 or higher being most desired.
   2) Efficacy against bacteria was assessed with the "Plate Contact Method (JIS Z2801)" against 0.4 ml of 10E5 cells/mo in Na/K phosphate buffer after 22 hours exposure. The samples were tested against Klebsiella pneumoniae ATCC #4352 and Staphylococcus aureus ATCC #6538 in the following two separate experiments:

### EXPERIMENT 1 - SILVER ELUSION

| **SAMPLE** | **Bio Ag Index, ng/cm**^{**2**} |
|---|---|
| | |
| A | 16.90 |
| B | 28.82 |
| C | 29.76 |
| G | 34.07 |
| J | --- |

The tested samples all contained well above the minimum Ag concentration level of 0.5 ng/cm ² required to show good efficacy. A higher loading of antimicrobial agent also exhibits high bioavailable silver.

### EXPERIMENT 2 - EFFICACY AGAINST BACTERIA

An untreated polypropylene (PP) control coupon is used to calculate the maximum value for log reduction of bacteria. The untreated PP control coupon does not affect bacterial growth and the number of bacteria that are still viable on the PP control coupon. The number of viable cells after exposure to the treated samples are compared to the number of viable cells after exposure to an internal standard untreated PP control. The maximum log reduction that can be measured in the test is a function of the number of viable cells in contact with the internal control after 18 -22 hours of exposure.

The treated articles show maximum log reduction against bacterial growth.

| **KLEBSIELLA PNEUMONIA E** | | | | |
|---|---|---|---|---|
| **SAMPLE** | **LR TRIAL #2** | **LR TRIAL #1** | **LR AVG.** | **LR STDEV** |
| | | | | |
| Viability | 9.40E+04 | 7.02E+05 | 3.98E+05 | 4.30E+05 |
| Internal Control | -0.31 | 0.24 | -0.04 | 0.39 |
| A | 3.48 | 3.80 | 3.64 | 0.23 |
| B | 3.48 | 3.80 | 3.64 | 0.23 |
| C | 3.48 | 3.80 | 3.64 | 0.23 |
| G | 3.48 | 3.80 | 3.64 | 0.23 |
| J | 2.57 | 1.29 | 1.93 | 0.91 |
| Maximum Value | 3.48 | 3.80 | 3.64 | 0.23 |

| **STAPHYLOCOCCUS AUREUS** | | | | |
|---|---|---|---|---|
| **SAMPLE** | **LR TRIAL #1** | **LR TRIAL #2** | **LR AVG.** | **LR STDEV** |
| | | | | |
| Viability | 1.38E+06 | 1.38E+06 | 1.38E+06 | 0.00E+00 |
| Internal Control | 0.36 | 0.09 | 0.23 | 0.19 |
| A | 3.79 | 4.24 | 4.02 | 0.32 |
| B | 3.98 | 4.24 | 4.11 | 0.19 |
| C | 3.98 | 4.24 | 4.11 | 0.19 |
| G | 3.98 | 4.24 | 4.11 | 0.19 |
| J | 2.09 | 0.72 | 1.41 | 0.97 |
| Maximum Value | 3.98 | 4.24 | 4.11 | 0.19 |

### EXAMPLE 2

Antimicrobial coating powders with various antimicrobial additive loading on abraded and unabraded coating surfaces under different chemistries. This experiment evaluates the silver elusion diffe rentiate whether antimicrobial surface and different antimicrobial loading will create sufficient bioavailable silver on the coating surface to produce the property of antimicrobial activity:

| **Ingredient** | **E** | **G** | **I** | **J** | **K** |
|---|---|---|---|---|---|
| | | | | | |
| I. Alphasan RC5000 | 1 | 3 | 1 | 2 | 3 |
| II. Base Powder | 99 | 97 | - - - | - - - | - - - |
| III. Base Powder | --- | - - - | 99 | 98 | 97 |

I. Alphasan RC5000: antimicrobial additive from Milliken Chemical.
II. Epoxy/polyester hybrid, white.
III. Polyester TGIC, white

### Experimental Information:

### Silver Elusion procedure:

The bioavailable silver was run using Milliken method AM -12 (modified plate method). An index result above 0.5 is normally required to achieve antimicrobial performance with results of >=1.0 or higher being most desired.

| **SAMPLE** | | **Bio Ag Index, ng/cm**^{**2**} |
|---|---|---|
| | | |
| E | Unabraded | 2.5655 |
| | Abraded | 6.1981 |
| G | Unabraded | 2.4817 |
| | Abraded | 22.1796 |
| I | Unabraded | 6.1374 |
| | Abraded | 15.4468 |
| J | Unabraded | 17.6951 |
| | Abraded | 33.4214 |
| K | Unabraded | 9.9413 |
| | Abraded | 50.8005 |

The tested samples all contained well above the minim um Ag concentration level of 0.5 ng/cm² required to show good efficacy. Both abraded and unabraded tests specimens tested well above the minimum Ag concentration level necessary for good efficacy. The abraded test specimens produced a much higher bioavai lable silver content compared to the unabraded specimens. This result indicates the property of antimicrobial activity will be maintained even when the surface is abraded. When comparing the bioavailable silver content between the hybrid and polyester co mpositions having the same amount of loading, the results indicate that the polyester has a higher bioavailable silver content, (E vs. I and G vs. K). Furthermore, as the test results indicate, a higher loading of the antimicrobial agent in the formulation results in higher silver content and thus an increase in the property of antimicrobial activity.

### EXAMPLE 3

Antimicrobial polyester sandstone coating powders with various antimicrobial additive loadings were prepared and are set forth below:

| **Ingredient** | **G** | **H** | **I** |
|---|---|---|---|
| | | | |
| Polyester base powder | 99.9 | 99.7 | 99.5 |
| Alphasan RC5000 | 0.1 | 0.3 | 0.5 |

Alphasan RC5000: antimicrobial additive from Milliken Chemical.

The average particle size of the antimicrobial powder is 270 microns.

### Experimental Information:

1) Efficacy against bacteria and yeast was evaluated with the "Plate Contact Method" against 0.4 ml of 10E5 cells/mo in Na/K phosphate buffer after 22 hours of exposure. The samples were tested against Klebsiella pneumoniae ATCC #4352 and Staphylococcus aureus ATCC #6538 and Candida Albicans in three separate experiments.
2) Silver Elusion Procedure:
   The bioavailable silver was determined by Milliken method AM -12 (modified plat method). An index result above 0.5 is normally required to achieve the property of antimic robial activity, with results of >=1.0 or higher being most desired.
3) Efficacy against fungi was evaluated using ISO method 846 against Asperigillus niger ATCC #6275. Samples were placed on Mineral Salts Agar and inoculated with 10 droplets of 10 ul each of 10⁵ fungal spores/ml in a synthetic nutrient medium followed by incubation for 59 days at 30° C and >90% relative humidity. Efficacy was measured by visual observation of the samples and a qualitative rating scale.

### EXPERIMENT 1 - EFFICACY OF ANTIMICROBIALS

This experimentation includes bacteria (Klebsiella pneumoniae, Staphylococus aureus) and Yeast (Candida Albicans).

The data indicate the log reduction value of the tested microbes compared to the maximum PP value.

| **KLEBSIELLA PNEUMONIA E** | | | | |
|---|---|---|---|---|
| **SAMPLE** | **LR TRIAL #2** | **LR TRIAL #1** | **LR AVG.** | **LR STDEV** |
| | | | | |
| Viability | 1.63E+05 | 3.85E+05 | 2.74E+05 | 1.57E+05 |
| Internal Control | 0.41 | 0.42 | 0.42 | 0.00 |
| G | 2.51 | 3.36 | 2.94 | 0.60 |
| H | 2.99 | 3.36 | 3.18 | 0.26 |
| I | 2.99 | 3.36 | 3.18 | 0.26 |
| Maximum Value | 2.99 | 3.36 | 3.18 | 0.26 |

| **STAPHYLOCOCCUS AUR EUS** | | | | |
|---|---|---|---|---|
| **SAMPLE** | **LR TRIAL #1** | **LR TRIAL #2** | **LR AVG.** | **LR STDEV** |
| | | | | |
| Viability | 7.02E+05 | 1.38E+06 | 1.04E+06 | 4.82E+05 |
| Internal Control | -0.23 | 0.57 | 0.17 | 0.57 |
| G | 4.27 | 3.76 | 4.02 | 0.36 |
| H | 4.27 | 3.76 | 4.02 | 0.36 |
| I | 4.27 | 3.76 | 4.02 | 0.36 |
| Maximum Value | 4.27 | 3.76 | 4.02 | 0.36 |

| **CANDIDA ALBICANS** | | | | |
|---|---|---|---|---|
| **SAMPLE** | **LR TRIAL #1** | **LR TRIAL #2** | **LR AVG.** | **LR STDEV** |
| | | | | |
| Viability | 1.38E+06 | 3.62E+04 | 7.10E+05 | 9.52E+05 |
| Internal Control | 1.34 | 1.37 | 1.38 | 0.02 |
| G | 2.23 | 1.39 | 1.81 | 0.60 |
| H | 2.67 | 1.39 | 2.03 | 0.91 |
| I | 2.99 | 1.39 | 2.19 | 1.14 |
| Maximum Value | 2.99 | 1.39 | 2.19 | 1.14 |

### EXPERIMENT 2 - SILVER ELUSION

This experimentation evaluates bioavailable silver content.

| **SAMPLE** | **Bio Ag Index, ng/cm**^{**2**} |
|---|---|
| | |
| G | 5.95 |
| H | 30.12 |
| I | 88.02 |

The tested samples were well above the minimum Ag concentration level of 0.5 ng/cm² required to show good efficacy. A higher loading of antimicrobial agent also exhibits high bioavailable silver. The results of the bioavailable silver content testing have a much higher index than previous results shown in Examples 1 and 2. This indicates that large particle size antimicrobial coating powders exhibit increased antimicrobial activity as compared to standard size powder coatings, such as 40 -60 microns, also treated with an antimicrobial agent.

### EXPERIMENT 3 - FUNGAL TESTING

Efficacy is measured by vi sual observation of the samples using the rating scale from ASTM Method G21 -96.

| **Observed Growth on Specimens** | **Rating** |
|---|---|
| | |
| None | 0 |
| Traces of growth (<10%) | 1 |
| Light growth (10-30%) | 2 |
| Medium growth (30-60%) | 3 |
| Heavy growth (60% to complete coverage) | 4 |

No growth of fungi was observed on any of the samples following 14 days. The Agar plate with Sample G (0.1% antimicrobial additive) developed growth consisting of bright white fungus on the Agar plate itself but no growth was observed on the samples. The re sults were unchanged even following 51 days of incubation.

### EXAMPLE 4

The following two samples were prepared to test outdoor durability of treated articles. The compositions of the samples are listed below:

| **Ingredient** | **A** | **B** |
|---|---|---|
| | | |
| Polyester TGIC | 100 pts | 99 pts |
| Alphasan RC5000 | - - - | 1 pt |
| Alphasan RC5000: antimicrobial additive from Milliken Chemical. | | |

Accelerated weathering test results: ASTM 4587, QUV 340A

| **Sample** | **500 hrs** | **1,000 hrs** |
|---|---|---|
| | | |
| STD Polyester White | 100.2% gloss retention | 96.5% gloss retention |
| Treated STD polyester | 100.1% gloss retention | 96.1% gloss retention |

The test result shows that the treated article has a good weathering performance compared to untreated article.

### EXAMPLE 5

Three samples were prepared to test the thermal stability o f the treated article. The composition of coating powders are listed below:

| **Ingredient** | **A** | **B** | **C** |
|---|---|---|---|
| | | | |
| Polyester TGIC | 100 pts | 99 pts | - - - |
| Super Polyester TGIC | - - - | - - - | 98 pts |
| Alphasan RC5000 | - - - | 1 pt | 2 pts |
| Alphasan RC5000: antimicrobial additive from Milliken Chemical. | | | |

The results of thermal stability:

| **Ingredient** | **STD Bake Schedule** | **Color Change after Overbake 400° F/30 mins** |
|---|---|---|
| | | |
| A) Untreated Polyester TGIC | 340° F/10 mins PMT | Delta E = 0.278 |
| | | DL = -0.055 |
| | | Da = 0.012 |
| | | Db = 0.272 |
| B) Treated Polyester TGIC | 340° F/10 mins PMT | Delta E = 0.216 |
| | | DL = -0.063 |
| | | Da = 0.023 |
| | | Db = 0.205 |
| C) Treated Super Polyester TGIC | 400° F/10 mins PMT | Delta E = 0.298 |
| | | DL = -0.042 |
| | | Da = 0.028 |
| | | Db = 0.294 |

The test results confirm th at the treated articles have similar or better themal stability compared to untreated article.

## Claims

1. A method of making a coating powder capable of forming a coating having the property of antimicrobial activity comprising:
(a) providing a resinous coating powder comprising a resinous base composition and at least one coating additive;
(b) adding to said resinous coating powder an effective amount of a solid, silver-containing antimicrobial additive powder to obtain the property of antimicrob ial activity when formed into a coating; and
(c) blending said powders at a temperature at least that of a glass transition temperature of said resinous base composition to create stable adherence between said powders and thereby form a coating powder.

2. A method for forming a coating having the property of antimicrobial activity on a substrate comprising:
(a) providing a coating powder comprising a solid, silver containing antimicrobial powder stably adhered to a resinous coating powder comprising a resinous base c omposition and at least one coating additive, said solid antimicrobial additive powder being present in an effective amount to obtain the property of antimicrobial activity when said coating powder is formed into a coating;
(b) applying said coating powder to a substrate; and
(c) forming a coating from said applied coating powder.

3. A coating powder comprising a solid, silver containing antimicrobial additive powder stably adhered to a resinous coating powder comprising a resinous base composition and at least one co ating additive, said solid antimicrobial additive powder being present in an effective amount to obtain the property of antimicrobial activity when formed into a coating.

4. The method or coating powder of any of the foregoing claims, wherein said resinous co ating powder is thermoplastic.

5. The method or coating powder of any of the foregoing claims, wherein said resinous coating powder is thermosetting.

6. The method or coating powder of any of the foregoing claims, wherein said resinous coating powder is radiatio n curable.

7. The method or coating powder of any of the foregoing claims, wherein said contained silver comprises silver metal.

8. The method or coating powder of any of the foregoing claims, wherein said contained silver comprises silver ions.

9. The method or co ating powder of any of the foregoing claims, wherein said contained silver is present in a minimum amount of about 0.5 ng/cm ² .

10. The method or coating powder of any of the foregoing claims, wherein said antimicrobial additive is a member selected from the g roup consisting of a zirconium phosphate -based ceramic ion exchange resin containing silver, a crystallized powder containing silver ions, a soluble glass containing silver ions, silver coated glass, silver coated mica, silver coated glass fibergrain, silver coated aluminum, silver coated nickel, silver coated copper, and admixtures thereof.

11. The method of any of claims 1 or 4 to 10, wherein said powder mixture is heated to a temperature at or above said glass transition temperature.

12. The method of any of cla ims 1 or 4 to 10, wherein said powder mixture is heated to a temperature from about 30 °C to about 100 °C during blending.

13. The method any of claims 2 or 4 to 10, wherein said resinous coating powder is thermoplastic and forming said coating is by melting.

14. The method of any of claims 2 or 4 to 10, wherein said resinous coating powder is thermosetting and forming said coating is by thermal curing.

15. The method of any of claims 2 or 4 to 10, wherein said resinous coating powder is radiation curable and forming sai d coating is by radiation curing.

16. A coating produced by the method of any of claims 2, 4 to 10 or 13 to 15.
